# EUROPÄISCHE PATENTSCHRIFT

(11) **EP 1 305 514 B1**
(45) Veröffentlichungstag und Bekanntmachung des Hinweises auf die Patenterteilung: **16.03.2005**
(21) Anmeldenummer: 01960136.8
(22) Anmeldetag: 01.08.2001
(51) Int. Cl.: F02M 25/07, F02B 47/08, F02B 77/08, F02D 21/08

(54) **VERFAHREN ZUR DIAGNOSE DER FUNKTIONSTÜCHTIGKEIT EINES ABGASRÜCKFÜHRUNGSSYSTEMS EINER BRENNKRAFTMASCHINE**
METHOD FOR THE FUNCTIONAL DIAGNOSIS OF AN EXHAUST RECYCLING SYSTEM ON AN INTERNAL COMBUSTION ENGINE
PROCEDE D'ANALYSE DE LA CAPACITE DE FONCTIONNEMENT D'UNE SOUPAPE DE RECYCLAGE DES GAZ D'ECHAPPEMENT D'UN MOTEUR THERMIQUE

(30) Priorität: 04.08.2000 DE 10038257
(43) Veröffentlichungstag der Anmeldung: 02.05.2003
(73) Patentinhaber: SIEMENS AKTIENGESELLSCHAFT, 80333 München (DE)
(72) Erfinder: BIRKNER, Christian, 93173 Irlbach (DE); KÄSBAUER, Michael, 93073 Neutraubling (DE)
(86) Internationale Anmeldenummer: PCT/DE2001/002928
(87) Internationale Veröffentlichungsnummer: WO 2002/012702

(56) Entgegenhaltungen:
- EP-A- 0 635 629
- DE-A- 19 527 030
- US-A- 5 461 569
- US-A- 5 513 616
- US-A- 5 617 833
- US-A- 5 703 285

## Beschreibung

Die Erfindung betrifft ein Verfahren zur Diagnose eines Abgasrückführungssystems einer Brennkraftmaschine nach dem Oberbegriff von Patentanspruch 1.

Zur Reduzierung des Stickoxidanteiles im Abgas einer Brennkraftmaschine werden Abgasrückführungssysteme eingesetzt. Über eine Abgasrückführleitung wird ein Teil des Abgases vom Abgastrakt in den Ansaugtrakt, d.h. in den Sammler des Saugrohres zurückgeführt. Über elektrische Signale einer Steuerungseinrichtung wird ein in der Abgasrückführleitung angeordnetes Abgasrückführventil angesteuert und damit die Masse des rückgeführten Abgases eingestellt. Da das Abgas der Brennkraftmaschine in seinen wesentlichen Bestandteilen ein Inertgas ist, kann durch Zumischen von Abgas zur angesaugten Verbrennungsluft die Verbrennungs-Spitzentemperatur gesenkt und damit der Ausstoß von Stickoxiden reduziert werden. Die Masse des rückgeführten Abgases im Verhältnis zur Summe aus der Masse des Frischgases (Ansaugluft) und der Masse des rückgeführten Abgases wird im allgemeinen als Abgasrückführrate bezeichnet.

Die Überwachung der Steuer- und Schließbarkeit eines solchen Abgasrückführventils ist erforderlich, um dessen richtiges Funktionieren gewährleisten zu können. Um die von den Gesetzgebern geforderten Abgasgrenzwerte einzuhalten, ist es notwendig, die Fahrzeuge mit Diagnoseeinrichtungen auszustatten, die es ermöglichen, die Fehlfunktionen von Sensoren und Systemen, die mit der Steuerung oder Betätigung abgasrelevanter Teile verbunden sind, zu erfassen und entsprechende Fehlermeldungen ausgeben. Zur Erfüllung von gesetzlichen Richtlinien zur On Board Diagnose (OBD) von Kraftfahrzeugen ist gerade die Überprüfung aller Komponenten des Luftpfades von besonderem Interesse. Insbesondere das vollständige Schließen des Abgasrückführventils muss möglich sein, da ansonsten bei einem Betrieb der Brennkraftmaschine mit ständig geöffnetem Abgasrückführventil die vorgeschriebenen Abgasgrenzwerte überschritten werden können.

In der EP 0 635 629 A1 ist ein Verfahren zur Diagnose eines Abgasrückführsystems einer Brennkraftmaschine beschrieben, bei dem das Abgasrückführventil während des stabilen Leerlaufbetriebes für eine bestimmte Diagnosezeit mit einem Diagnosetastverhältnis angesteuert und dabei die Reaktion auf den Motorbetriebsparameter Drehzahl ausgewertet wird. Es wird die Differenz gebildet zwischen der Drehzahl, die sich im stabilen Leerlaufbetrieb der Brennkraftmaschine vor Aktivieren des Abgasrückführventils einstellt und derjenigen Drehzahl, die sich bei Ansteuern mit einem Diagnosetastverhältnis ergibt. Überschreitet die Differenz einen vorgegebenen Diagnosegrenzwert, so wird auf ein intaktes Abgasrückführsystem geschlossen, andernfalls wird eine Fehlermeldung ausgegeben.

Aus der DE 195 27 030 A1 ist ein Abnormalitätserfassungsverfahren und eine Vorrichtung für ein Abgasrückführungs-Steuersystem einer Brennkraftmaschine bekannt. Die Abnormalität wird dabei hervorgerufen durch ein operatives Nachhinken einer Membran, welche ein Abgasrückführungsventil (AGR-Ventil) bildet. Das AGR-Ventil wird in Abhängigkeit von der Motorbetriebsinformation einschließlich eines Ansaugverteilerdrucks gesteuert. Eine Bedingung, die zum Aktivieren der Abnormalitätsentscheidung zu erfüllen ist, wird erfasst. Beim Erfassen der Abnormalitätsentscheidungs- Aktivierungsbedingung wird das AGR-Ventil zwangsweise geöffnet oder geschlossen. Auf der Basis der Differenz des Ansaugverteilerdrucks beim zwangsweisen Öffnen/Schließen des AGR-Ventils wird auf eine mögliche Abnormalität des AGR-Ventils entschieden.

Es ist die Aufgabe der Erfindung, ein Verfahren anzugeben, mit dem auf einfache Weise ohne zusätzliche Sensorik die Funktionstüchtigkeit des Abgasrückführungssystems der Brennkraftmaschine überprüft werden kann.

Diese Aufgabe wird erfindungsgemäß durch die Merkmale des Patentanspruchs 1 gelöst. Vorteilhafte Weiterbildungen sind in den Unteransprüchen angegeben

Werden beim Abschalten der Brennkraftmaschine Drosselklappe und Abgasrückführventil geschlossen, kann die Steuer- und Schließbarkeit des Abgasrückführventils mithilfe eines ohnehin vorhandenen Luftmassen- und Drehzahlsensors überwacht werden. So lässt sich im sonst fehlerfreien Fahrzeugbetrieb und bei definierten Ausgangsbetriebsparametern anhand des Verlaufs der Signale dieser beiden Sensoren die Funktionstüchtigkeit des Abgasrückführventils unter Verwendung von applizierbaren zeitlichen Verzögerungen und Schwellenwerten diagnostizieren.

Die Erfindung zeichnet sich dadurch aus, dass zur Diagnose des Abgasrückführventils beim Abschalten der Brennkraftmaschine die Drosselklappe und das Abgasrückführventil geschlossen und mittels Drehzahlauswertung innerhalb eines Segmentes überprüft wird, ob in den Zylindern der Brennkraftmaschine noch eine bestimmte Kompression feststellbar ist. Liegt eine Drehzahldifferenz oberhalb eines Schwellenwertes, so wird unter der Voraussetzung eines fehlerfreien Schließens der Drosselklappe auf ein nicht völlig schließendes Abgasrückführventil erkannt.

Das Verfahren hat insbesondere den Vorteil, dass zur Überprüfung der Steuer- und Schließbarkeit des Abgasrückführventils keine zusätzliche Sensorik nötig ist.

Ein Ausführungsbeispiel der Erfindung ist im folgenden unter Bezugnahme auf die schematischen Zeichnungen näher erläutert.

Es zeigen:
- Figur 1: in Blockdarstellung eine Brennkraftmaschine mit einer Abgasrückführungseinrichtung und einer Steuerungseinrichtung zum Durchführen des erfindungsgemäßen Verfahrens,
- Figur 2: Zeitdiagramme für den Luftmassenstrom und zugehöriger Drehzahl der Brennkraftmaschine,
- Figur 3: ein Ablaufdiagramm des Verfahrens und
- Figur 4: den zeitlichen Verlauf der Drehzahl der Brennkraftmaschine mit und ohne Kompression in einem Zylinder

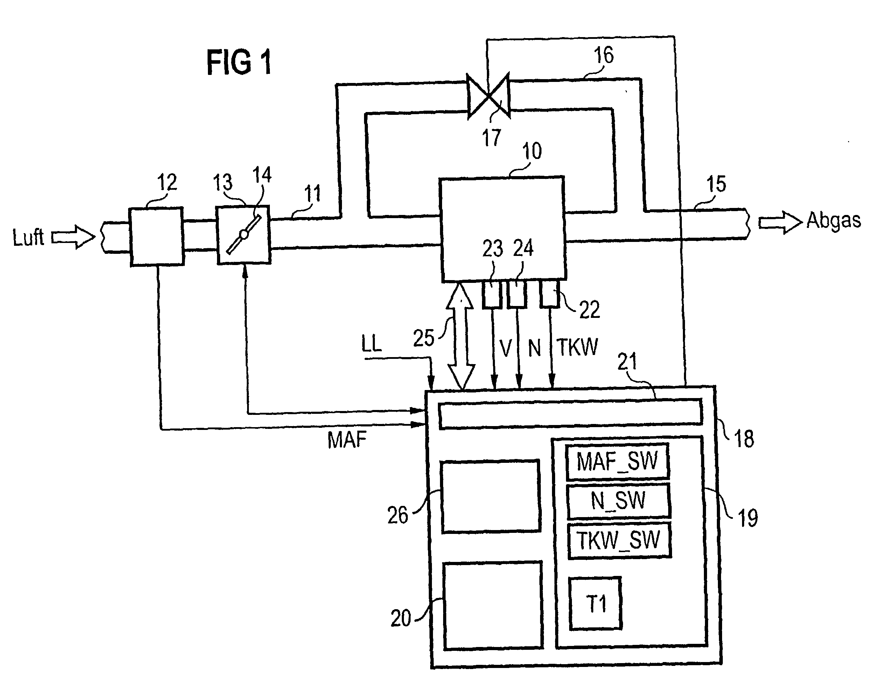

In Figur 1 ist in Form eines Blockschaltbildes sehr vereinfacht eine Diesel-Brennkraftmaschine 10 gezeigt, bei der das erfindungsgemäße Verfahren angewendet wird. Dabei sind nur diejenigen Komponenten dargestellt, die für das Verständnis der Erfindung notwendig sind. Insbesondere ist der Kraftstoffkreislauf sowie die Abgasnachbehandlungsanlage nicht gezeigt. Das erfindungsgemäße Verfahren kann aber auch bei einer fremdgezündeten Brennkraftmaschine eingesetzt werden, in diesem Falle sind die Steller und Sensoren entsprechend zu modifizieren.

Der Brennkraftmaschine 10 wird über einen Ansaugtrakt 11 die zur Verbrennung notwendige Luft zugeführt. Im Ansaugtrakt 11 sind in Strömungsrichtung der angesaugten Luft (Pfeilsymbol) gesehen nacheinander ein Luftmassenmesser 12 und ein Drosselklappenblock 13 vorgesehen. Dieser beinhaltet eine Drosselklappe 14 und optional einen nicht dargestellten Drosselklappensensor, der ein dem Öffnungswinkel der Drosselklappe 14 entsprechendes Signal erfasst. Bei der Drosselklappe 14 handelt es sich beispielsweise um ein elektromotorisch angesteuertes Drosselorgan (E-Gas), dessen Öffnungsquerschnitt neben der Betätigung durch den Fahrer selbst (Fahrerwunsch) abhängig vom Betriebsbereich der Brennkraftmaschine über elektrische Signale einer Steuerungseinrichtung einstellbar ist.

Ausgangsseitig ist die Brennkraftmaschine 10 mit einem Abgastrakt 15 verbunden, in dessen weiteren Verlauf ein Abgaskatalysator und ein Schalldämpfer angeordnet sind (nicht dargestellt).

Eine Abgasrückführleitung 16 zweigt von dem Abgastrakt 15 ab und mündet stromabwärts des Drosselklappenblocks 13 in den Ansaugtrakt 11. In der Abgasrückführleitung 16 ist ein Abgasrückführventil 17 angeordnet, das beispielsweise einen nicht dargestellten elektromagnetischen Aktor umfasst.

Die Steuerung und Regelung der Brennkraftmaschine 10 übernimmt eine elektronische Steuerungseinrichtung 18. Solche elektronischen Steuerungseinrichtungen, die in der Regel einen oder mehrere Mikroprozessoren beinhalten, sind an sich bekannt, so dass im folgenden nur auf den im Zusammenhang mit der Erfindung relevanten Aufbau und dessen Funktionsweise eingegangen wird. Insbesondere weist die Steuerungseinrichtung 18 einen Fehlerspeicher 20 und eine Speichereinrichtung 19 auf, in der verschiedene Kennfelder und Schwellenwerte gespeichert sind, deren Bedeutung anhand der Beschreibung der weiteren Figuren noch näher erläutert wird.

Die Steuerungseinrichtung 18 umfasst ferner eine Vorverarbeitungseinheit 21, die Signale von Sensoren aufbereitet, welche Betriebsgrößen der Brennkraftmaschine 10 erfassen. Insbesondere werden der Steuerungseinrichtung 18 ein Signal MAF des Luftmassenmessers 12, ein Signal TKW eines Kühlmitteltemperatursensors 22, ein Signal v eines Geschwindigkeitssensors 23, ein Signal N eines Drehzahlsensors 24 und ein Signal LL, das den Leerlaufbetrieb der Brennkraftmaschine 10 kennzeichnet, zugeführt. Der Leerlaufbetrieb kann beispielsweise durch Auswerten des Signals eines Pedalwertgebers (nicht dargestellt) erkannt werden. Die Steuerungseinrichtung 18 ist noch mit weiteren nicht explizit dargestellten Sensoren und Aktoren über einen Daten-/Steuerbus 25 verbunden.

Die elektronische Steuerungseinrichtung 18 weist darüber hinaus eine elektrische Einrichtung 26 zum Steuern des Aktors des Abgasrückführventils 17 auf, welche in Abhängigkeit von einer oder mehreren Betriebsgrößen der Brennkraftmaschine den Öffnungsgrad des Abgasrückführventils 17 einstellt.

Ein Ablaufdiagramm des Verfahrens zur Diagnose des Abgasrückführungssystem ist in der Figur 3 dargestellt.

In einem ersten Verfahrensschritt S1 wird abgefragt, ob vorgegebene Bedingungen zur Durchführung der Diagnose erfüllt sind. Wichtigste Voraussetzung für die Durchführung der Diagnose ist, dass sich die Brennkraftmaschine im Leerlaufbetrieb befindet. Um jegliche Beeinträchtigung des Fahrbetriebes während der Diagnose auszuschließen, wird auch überprüft, ob die Fahrzeuggeschwindigkeit v annähernd Null ist. Da Fahrzeuggeschwindigkeiten v=0 nur mit relativ großem Aufwand erfasst werden können, werden Fahrzeuggeschwindigkeiten, die zwar größer als Null sind, aber noch unterhalb eines bestimmten, vorgegebenen Grenzwertes (z.B. 1,8 km/h) liegen, als Signal für v = 0 behandelt. Außerdem muss die Kühlmitteltemperatur TKW oberhalb eines vorgegebenen Schwellenwertes TKW_SW liegen (warme Brennkraftmaschine) und es darf kein Fehlereintrag für den Luftmassenmesser 12 in dem Fehlerspeicher 20 vorliegen. Diese Abfragen werden ständig wiederholt, bis das Ergebnis der Abfrage positiv ist.

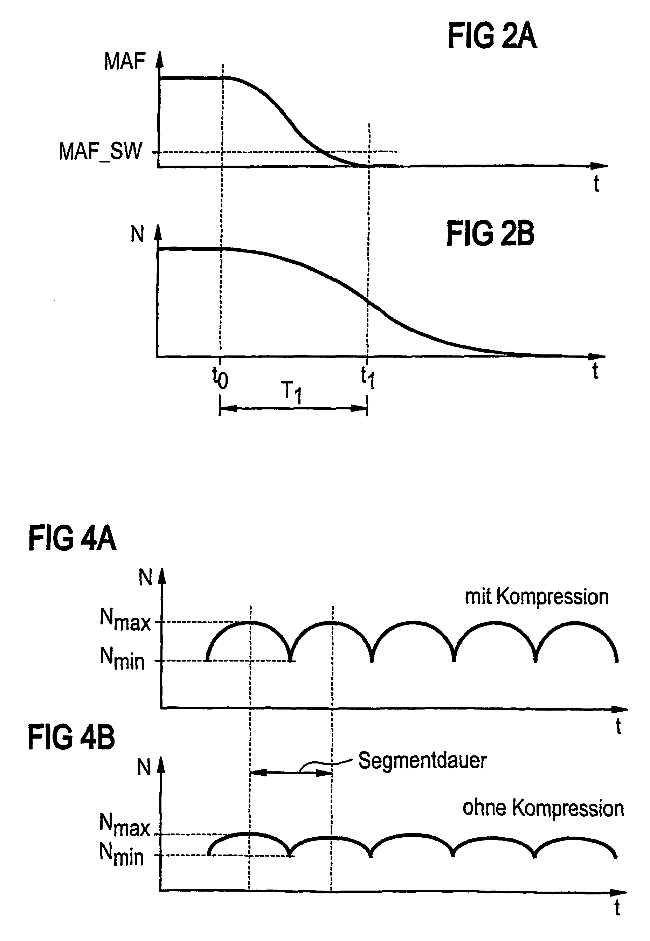

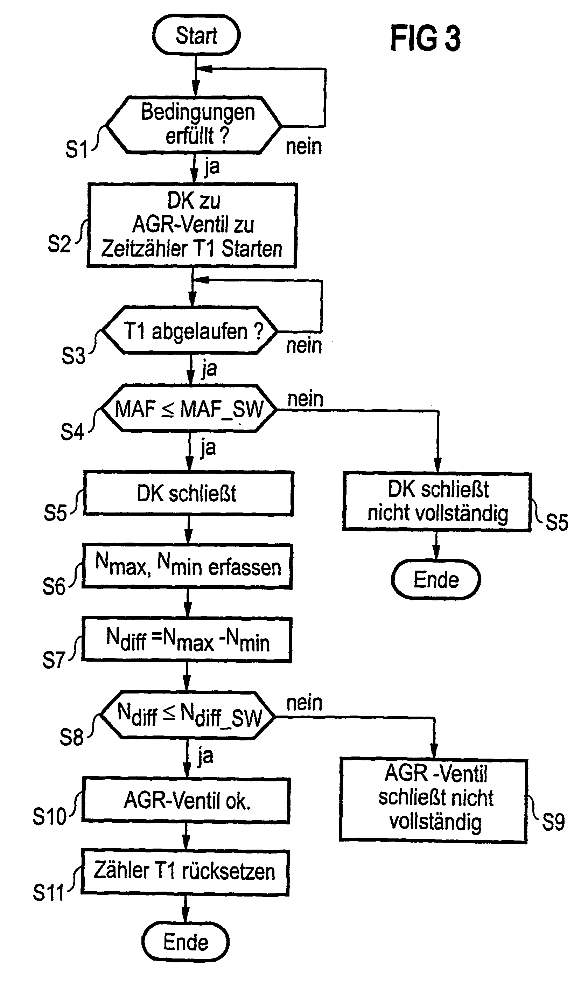

Ist dies der Fall, so wird in einem Verfahrensschritt S2 zum Zeitpunkt t0 die Drosselklappe 14 und das Abgasrückführventil 17 geschlossen und keine Kraftstoffmasse mehr zugeführt. Gleichzeitig wird ein Zeitzähler für eine vorgegebene Zeitdauer T1 gestartet. Als Folge davon nimmt die Drehzahl N der Brennkraftmaschine 10 ab, bis die Brennkraftmaschine völlig zum Stehen kommt. Wenn die Drosselklappe komplett schließt, fällt der Luftmassenstrom in einer charakteristischen Weise ab, bis bei einem Zeitpunkt t1 überhaupt keine Luftmasse mehr durchgesetzt wird, d.h. der Luftmassenmesser 12 einen Wert MAF liefert, der unterhalb eines applizierbaren Schwellenwertes MAF_SW liegt. In der Figur 2a) ist der zeitliche Verlauf des Signals MAF des Luftmassenmessers 12 und in Figur 2b) das zugehörige Drehzahlsignal N aufgetragen.

In einem Verfahrensschritt S3 wird deshalb abgefragt, ob die Zeitdauer T1 seit dem Schließen der Drosselklappe 14 und des Abgasrückführventils 17 zum Zeitpunkt t0 bereits verstrichen ist. Ist die Zeitdauer T1 abgelaufen, so wird in einem Verfahrensschritt S4 der aktuelle Wert des Signals MAF des Luftmassenmessers mit dem Schwellenwert MAF_SW verglichen.

Im Falle einer nicht vollständig schließbaren Drosselklappe wird weiterhin Luft durchgesetzt und der Luftmassenstrom fällt langsamer ab, bleibt also nach dem Ablauf der Zeitdauer T1 oberhalb des Schwellenwertes MAF_SW.

Befindet sich der Wert des Signals MAF des Luftmassenmessers nach Ablauf der Zeitdauer T1 oberhalb des Schwellenwertes MAF_SW, so erfolgt in einem Verfahrensschritt S5 ein entsprechender Fehlereintrag, z.B. "Drosselklappe schließt nicht vollständig" in den Fehlerspeicher 20 und das Verfahren ist zu Ende. Eine nachfolgende Überprüfung des Abgasrückführungssystems mit dem angegebenen Verfahren würde bei einer nicht vollständig schließbaren Drosselklappe zu unsicheren Diagnoseergebnissen führen.

Ist nach Ablauf der Zeitdauer T1 der Wert für den Luftmassenstrom MAF gleich oder kleiner dem Schwellenwert MAF_SW, d.h. die Drosselklappe konnte geschlossen werden, kann beim Abschalten der Brennkraftmaschine die Schließbarkeit des Abgasrückführventils 17 überprüft werden. Hierfür wird der Sachverhalt ausgenutzt, dass im Falle eines vollständigen Schließens sowohl der Drosselklappe 12, als auch des Abgasrückführventils 17 bei gleichzeitigem Abschalten der Kraftstoffzufuhr in die Zylinder der Brennkraftmaschine sehr schnell keine Kompression mehr in den Zylindern vorliegen kann.

Betrachtet man die Drehzahl der Brennkraftmaschine entsprechend kurbelwinkel- oder zeitaufgelöst pro Segment, so lässt sich im Falle von Kompression im Zylinder (Luftzufuhr in den Zylinder, Drosselklappe und/oder Abgasrückführventil nicht geschlossen) eine deutlich höhere Drehzahlrauigkeit innerhalb eines Segmentes feststellen als bei fehlender Kompression (Drosselklappe und Abgasrückführventil geschlossen). Die Drehzahlrauigkeit kann durch die Drehzahldifferenz Ndiff zwischen maximaler Drehzahl Nmax und minimaler Drehzahl Nmin pro Segment ausgedrückt werden. In der Figur 4 sind diese Zusammenhänge grafisch dargestellt.

In einem Verfahrensschritt S6 werden deshalb die Werte Nmax und Nmin pro Segment erfasst und in einem Verfahrensschritt S7 daraus der Wert für die Differenz Ndiff = Nmax - Nmin gebildet.

Liegt der Wert für die Differenz Ndiff oberhalb eines applizierbaren Schwellenwertes Ndiff_SW, so liegt eine Kompression im Zylinder vor, deren Ursache nur in einem nicht vollständig schließbaren Abgasrückführventil liegen kann, da im Verfahrensschritt S5 bereits ein fehlerfreies Schließen der Drosselklappe festgestellt wurde und damit die Drosselklappe als mögliche Ursache für eine Luftzufuhr ausscheidet. Diese zweite Abfrage im Verfahrensschritt S8 liefert also eine eindeutige Aussage über die Funktionstüchtigkeit des Abgasrückführventils.

In diesem Falle erfolgt in einem Verfahrensschritt S9 ein entsprechender Fehlereintrag z,B. "AGR-Ventil schließt nicht vollständig" in den Fehlerspeicher 20.

Ist dagegen der Wert der Differenz Ndiff kleiner oder gleich dem Schwellenwert Ndiff_SW, so hat sich das Abgasrückführventil 17 vollständig schließen lassen und das Abgasrückführventil wird als fehlerfrei erkannt (Verfahrensschritt S10).

Die beiden genannten Fehlereinträge für das Abgasrückführventil 17 werden wie auch jeder andere Fehlereintrag in der Regel als Code abgelegt. Darüber hinaus ist es auch zweckmäßig, die Fehlereinträge erst nach einer statistischen Auswertung vorzunehmen, um Fehleinträge zu vermeiden. Ebenso ist es möglich, das Ergebnis der Diagnose, insbesondere bei Auftreten eines Fehlers eine akustische und/oder optische Warneinrichtung, beispielsweise eine Fehlerlampe im Fahrzeuginnenraum zu aktivieren.

Die Zeitdauer T1, sowie die Schwellenwerte für den Luftmassenstrom MAF_SW und der Drehzahldifferenz Ndiff_SW werden experimentell durch Fahrversuche und/oder auf dem Prüfstand ermittelt und sind in der Speichereinrichtung 19 abgelegt.

In einem letzten Verfahrensschritt S11 wird anschließend der Zähler für die Zeitdauer T1 zurückgesetzt und das Verfahren ist beendet.

## Patentansprüche

1. Verfahren zur Diagnose der Funktionstüchtigkeit eines Abgasrückführungssystems einer Brennkraftmaschine (10)
- mit einer Abgasrückführleitung (16), welche einen Abgastrakt (15) der Brennkraftmaschine (10) mit einem, eine Drosselklappe (12) aufweisenden Ansaugtrakt (11) der Brennkraftmaschine (10) verbindet, so dass Abgas in den Ansaugtrakt (11) zurückgeführt werden kann,
- mit einem in der Abgasrückführleitung (16) angeordneten, zur Einstellung des Durchlassquerschnittes der Abgasrückführleitung (16) dienenden, mittels elektrischer Signale ansteuerbaren Abgasrückführventil (17),
- wobei das Abgasrückführventil (17) zu Diagnosezwecken derart angesteuert wird, dass sich Betriebsparameter der Brennkraftmaschine (10) ändern und die Reaktion der Betriebsparameter ausgewertet werden,
**dadurch gekennzeichnet, dass**
- bei ausgeschalteter Kraftstoffzufuhr zu den Zylindern der Brennkraftmaschine (10) und bei Stillstand des mit der Brennkraftmaschine (10) angetriebenen Fahrzeuges
- in einem ersten Schritt die Drosselklappe (12) und das Abgasrückführventil (17) geschlossen werden,
- in einem zweiten Schritt nach Ablauf einer vorgegebenen Zeitdauer (T1) überprüft wird, ob das Signal (MAF) eines Luftmassenmessers (12) unterhalb eines vorgegebenen Schwellenwertes (MAF_SW) liegt,
- in einem dritten Schritt bei Unterschreiten des Schwellenwertes (MAF_SW) überprüft wird, ob in den Zylindern der Brennkraftmaschine eine Kompression vorhanden ist und
- in Abhängigkeit des Ergebnisses der Überprüfung im dritten Schritt das Abgasrückführventil (17) hinsichtlich seiner vollständigen Schließbarkeit bewertet wird.

2. Verfahren nach Anspruch 1, **dadurch gekennzeichnet, dass** das Vorhandensein einer Kompression in den Zylindern durch Auswerten des Wertes einer Drehzahldifferenz (Ndiff) zwischen einem Wert für eine maximale Drehzahl (Nmax) und einem Wert für eine minimale Drehzahl (Nmin) innerhalb eines kurbelwellenbezogenen Segmentes festgestellt wird.

3. Verfahren nach Anspruch 2, **dadurch gekennzeichnet, dass** auf ein fehlerhaftes Abgasrückführventil (17) geschlossen wird, wenn der Wert für die Drehzahldifferenz (Ndiff) einen vorgegebenen Schwellenwert (Ndiff_SW) überschreitet.

4. Verfahren nach Anspruch 3, **dadurch gekennzeichnet, dass** bei Erkennen eines fehlerhaften Abgasrückführventils (17) ein entsprechender Eintrag in einen Fehlerspeicher (20) erfolgt.

5. Verfahren nach Anspruch 1, **dadurch gekennzeichnet, dass** die Diagnose abgebrochen wird, wenn das Signal des Luftmassenmessers (12) oberhalb des Schwellenwertes (MAF_SWE) liegt.

6. Verfahren nach Anspruch 1 oder 2, **dadurch gekennzeichnet, dass** die Schwellenwerte (MAF_SW, Ndiff_SW) und die Zeitdauer (T1) experimentell ermittelt werden und in einer Speichereinrichtung (19) abgelegt sind.

## Claims

1. Method for diagnosing the operational capability of an exhaust gas recycling system of an internal combustion engine (10)
- having an exhaust gas recycling line (16) which connects an exhaust gas tract (15) of the internal combustion engine (10) to an intake tract (11), having a throttle valve (12), of the internal combustion engine (10) so that exhaust gas can be recycled into the intake tract (11),
- having an exhaust gas recycling valve (17) which is arranged in the exhaust gas recycling line (16), is used to set the flow passage of the exhaust gas recycling line (16) and can be actuated by means of electrical signals,
- the exhaust gas recycling valve (17) being actuated for diagnostic purposes, in such a way that operating parameters of the internal combustion engine (10) change and the reaction of the operating parameters is evaluated,
**characterized in that**
- when the fuel supply to the cylinders of the internal combustion engine (10) is switched off and when the vehicle driven by the internal combustion engine (10) is in a stationary state,
- in a first step the throttle valve (12) and the exhaust gas recycling vale (17) are closed,
- in a second step, after expiry of a predefined time period (T1), a check is made to determine whether the signal (MAF) of an air mass flow rate meter (12) lies below a predefined threshold value (MAF_SW),
- in a third step, when the value drops below the threshold value (MAF_SW), a check is made to determine whether compression has occurred in the cylinders of the internal combustion engine, and
- in the third step the possibility of completely closing the exhaust gas recycling valve (17) is assessed as a function of the result of the check.

2. Method according to Claim 1, **characterized in that** the presence of compression in the cylinders is detected by evaluating the value of a rotational speed difference (Ndiff) between a value for a maximum rotational speed (Nmax) and a value for a minimum rotational speed (Nmin) within a crankshaft-related segment.

3. Method according to Claim 2, **characterized in that** it is determined that an exhaust gas recycling valve (17) is faulty if the value of the rotational speed difference (Ndiff) exceeds a predefined threshold value (Ndiff_SW).

4. Method according to Claim 3, **characterized in that** when a faulty exhaust gas recycling valve (17) is detected a corresponding entry is made in a fault memory (20).

5. Method according to Claim 1, **characterized in that** the diagnosis is aborted if the signal of the air mass flow rate meter (12) lies above the threshold valve (MAF_SWE).

6. Method according to Claim 1 or 2, **characterized in that** the threshold values (MAF_SW, Ndiff_SW) and the time period (T1) are determined experimentally and stored in a storage device (19).

## Revendications

1. Procédé pour effectuer le diagnostic de l'aptitude au fonctionnement d'un système de recyclage des gaz d'échappement d'un moteur à combustion interne (10), qui comprend
- une conduite de recyclage des gaz d'échappement (16) qui relie un circuit de gaz d'échappement (15) du moteur à combustion interne (10) à un circuit d'admission (11) du moteur à combustion interne (10) qui présente un volet de réglage (12), de sorte que les gaz d'échappement peuvent être recyclés dans le circuit d'admission (11),
- une soupape de recyclage des gaz d'échappement (17) pouvant être commandée
au moyen de signaux électriques, disposée dans le conduite de recyclage des gaz d'échappement (16) et qui sert au réglage de la section de passage de la conduite de recyclage des gaz d'échappement (16),
- la soupape de recyclage des gaz d'échappement (17) étant commandée pour l'exécution du diagnostic, de telle manière que des paramètres de fonctionnement du moteur à combustion interne (10) soient modifiés et que la réaction des paramètres de fonctionnement soit analysée,
**caractérisé en ce que**
- lorsque l'envoi de carburant au cylindre du moteur à combustion interne (10) est coupé et lorsque le véhicule entraîné par le moteur à combustion interne (10) est à l'arrêt,
- dans une première étape, le volet de réglage (12) et la soupape de recyclage des gaz d'échappement (17) sont fermés,
- dans une deuxième étape, après écoulement d'une période prédéterminée (T1), on vérifie si le signal (MAF) d'un compteur de masse d'air (12) se trouve au-dessous d'une valeur de seuil (MAF_SW) prédéterminée.
- dans une troisième étape, si l'on est passé au-dessous de la valeur de seuil (MAF_SW), on vérifie si une compression est présente dans les cylindres du moteur à combustion interne et
- selon le résultat de la vérification exécutée dans la troisième étape, la soupape de recyclage des gaz d'échappement (17) est analysée sous le rapport de son aptitude à la fermeture complète.

2. Procédé selon la revendication 1, **caractérisé en ce que** la présence d'une compression dans les cylindres est constatée par l'analyse de la valeur d'une différence de vitesse de rotation (Ndiff) entre une valeur pour la vitesse de rotation maximale (Nmax) et une valeur pour une vitesse de rotation minimale (Nmin) dans les limites d'un segment rapporté au vilebrequin.

3. Procédé selon la revendication 2, **caractérisé en ce qu'**une soupape de recyclage des gaz d'échappement (17) défectueuse est fermée lorsque la valeur pour la différence de la vitesse de rotation (Ndiff) devient supérieure à une valeur de seuil (Ndiff_SW) prédéterminée.

4. Procédé selon la revendication 3, **caractérisé en ce qu'**en cas de détection d'une soupape de recyclage des gaz d'échappement (17) défectueuse, il se produit une inscription correspondante dans une mémoire de défauts (20).

5. Procédé selon la revendication 1, **caractérisé en ce que** le diagnostic est interrompu lorsque le signal du compteur de masse d'air (12) se trouve au-dessus de la valeur de seuil (MAF_SWE).

6. Procédé selon la revendication 1 ou 2, **caractérisé en ce que** les valeurs de seuils (MAF_SW, Ndiff_SW) et la période (T1) sont déterminées expérimentalement et sont enregistrées dans un dispositif de mémoire (19).
